# EUROPÄISCHE PATENTSCHRIFT

(11) **EP 1 163 559 B1**
(45) Veröffentlichungstag und Bekanntmachung des Hinweises auf die Patenterteilung: **07.03.2007**
(21) Anmeldenummer: 00901133.9
(22) Anmeldetag: 25.01.2000
(51) Int. Cl.: G06F 21/00

(54) **VERFAHREN ZUR SICHERUNG DES ZUGANGS ZU EINER DATENVERARBEITUNGSEINRICHTUNG UND ENTSPRECHENDE VORRICHTUNG**
METHOD FOR SECURING ACCESS TO A DATA PROCESSING DEVICE AND APPROPRIATE DEVICE
PROCEDE ET DISPOSITIF PERMETTANT DE SECURISER L'ACCES A UN DISPOSITIF DE TRAITEMENT DE DONNEES

(30) Priorität: 27.01.1999 DE 19903105
(43) Veröffentlichungstag der Anmeldung: 19.12.2001
(73) Patentinhaber: BB-Data Gesellschaft für Informations- und Kommunikationssysteme mbH, 13355 Berlin (DE)
(72) Erfinder: MEY, Thorsten-Uwe, D-13597 Berlin (DE); HERRMANN, Dirk, D-12557 Berlin (DE)
(74) Vertreter: Meinke, Dabringhaus und Partner GbR
(86) Internationale Anmeldenummer: PCT/EP2000/000548
(87) Internationale Veröffentlichungsnummer: WO 2000/048060

(56) Entgegenhaltungen:
- EP-A- 0 205 095
- US-A- 5 249 230
- US-A- 5 757 916

## Beschreibung

Die Erfindung betrifft ein Verfahren zur Sicherung des Zugangs zu mindestens einer Datenverarbeitungseinrichtung über mindestens ein Zugangsterminal, das über eine Datenverbindung mit der Datenverarbeitungseinrichtung verbunden ist und bei dem der Datenverarbeitungseinrichtung über die Datenverbindung ein Identifikationssignal übermittelt wird. Außerdem betrifft die Erfindung eine Vorrichtung, die mindestens eine Datenverarbeitungseinrichtung und mindestens ein Zugangsterminal umfaßt, das über eine Datenverbindung mit der Datenverarbeitungseinrichtung verbunden ist.

Es ist üblich, daß der Zugang zu einer Datenverarbeitungseinrichtung, wie beispielsweise einem Computer, in einem lokalen (LAN) oder in einem räumlich weit verteilten Netzwerk (wide area network, WAN) auf solche Personen oder Vorgänge zu beschränken, die vorher zu einem solchen Zugang autorisiert wurden. Damit ein autorisierter Vorgang oder eine autorisierte Person Zugang zu der Datenverarbeitungseinrichtung erlangt, muß sie ihre Autorisierung zunächst beispielsweise dadurch nachweisen, daß sie der Datenverarbeitungseinrichtung ein identifikationssignal, beispielsweise ein Password oder einen PIN-Code übermittelt. Zusätzlich wird oft eine Benutzerkennung (user id) oder eine Vorgangskennung (task id) übermittelt, die User- oder die Task Id werden zusammen mit dem Identifikationssignal, beispielsweise dem PIN-Code, von der Datenverarbeitungseinrichtung analysiert. Wenn diese Analyse ergibt, daß beispielsweise die Benutzerkennung und der PIN-Code oder das Password zusammengehören oder für einen autorisierten Benutzer stehen, wird der Zugang zu der Datenverarbeitungseinrichtung freigegeben.

Insbesondere bei weiträumigen Datennetzwerken (WAN), aber auch bei Datenverarbeitungseinrichtungen zur Prozeßsteuerung in größeren Maschinen oder Industrieanlagen kommt es häufiger vor, daß das Zugangsterminal und die Datenverarbeitungseinrichtung räumlich weit voneinander entfernt sind. Es ist sogar denkbar, daß sich das Zugangsterminal in einem anderen Netzwerk als die Datenverarbeitungseinrichtung befindet, und daß beide beispielsweise über das Internet miteinander verbunden sind. In einem solchen Fall kann praktisch jeder Computer mit Internetzugang als Zugangsterminal für die Datenverarbeitungseinrichtung fungieren. Derdadurch mögliche Zugriff auf die Datenverarbeitungseinrichtung von einem beliebigen Ort erleichtert letztendlich einen böswilligen Zugriff auf die Datenverarbeitungseinrichtung.

Die Veröffentlichung US-A-5 249 230 offenbart die Sicherung des Zugangs eines Zugangsterminals zu einem Netzwerk mittels öffentlichem und geheimen Schlüssel und einer ldentifikationskennug des Zugangsterminals. Die weitere Veröffentlichung EP-A-0 205 095 offenbart die Sicherung des Telefonzugangs eines Zugangsterminals zu einer Datenverarbeitungseinrichtung, wobei eine Identifikationskennung des Zugangsterminals (Kennung einer mit dem Zugangsterminals verbundenen Sicherungseinheit) und die Zugangsterminals-Anrufertelefonnummer übermittelt werden und die Datenverarbeitungseinrichtung das Zugangsterminals daraufhin zurückruft. Die Veröffentlichung US-A-5 757 916 beschreibt einen System zur Authentifizierung von Standorten entfernter Teilnehmer wobei der Teilnehmer durch GPS Daten authentifiziert wird.

Die Aufgabe der Erfindung wird durch ein Verfahren gemäss Anspruch 1 sowie eine Anordnung gemäss Anspruch 14 gelöst. Weitere Ausführungen der Erfinding sind in den abhängigen Patentansprüchen spezifiziert.

Ziel der Erfindung ist es, den Zugang zu einer oder mehreren Datenverarbeitungseinrichtungen gegen einen böswilligen Zugriff besser zu sichern.

Erfindungsgemäß wird dieses Ziel mit einem Verfahren der eingangs genannten Art erreicht, welches sich dadurch auszeichnet, daß dem Zugangsterminal für einen Zugriff auf die Datenverarbeitungseinrichtung eine Identifikationskennung zugeord-net wird, und daß die Identifikationskennung mit dem Lokationssignal zu einem Wertepaar zusammengefaßt, anschließend der Datenverarbeitungseinrichtung als Identifikationssignal übermittelt und daraufhin mit in einer Speichereinheit gespeicherten zulässigen Wertepaaren verglichen wird, und daß bei Übereinstimmen des übermittelten Wertepaares mit einem zulässigen Wertepaar der Zugang zu der Datenverarbeitungseinrichtung freigegeben wird. Die Identifikationskennung kann dabei dem Zugangsterminal fest zugeordnet und in dem Zugangsterminal gespeichert werden. Alternativ wird die Identifikationskennung dem Zugangsterminal bei einem Zugriff übermittelt, und zwar indem die Identifikationskennung dem Zugangsterminal bei einem Zugriff über eine Tastatur eingegeben wird oder indem die Identifikationskennung dem Zugangsterminal bei einem Zugriff über ein transportables, von dem Zugangsterminal auslesbares Speichermedium wie einer Chipkarte übermittelt wird. Neben diesen bevorzugten Varianten der Zuordnung einer ldentifikationskennung zu dem Zugangsterminal sind auch weitere Varianten denkbar.

Kern des erfindungsgemäßen Verfahren ist es eine Identifikationskennung immer gemeinsam mit einem Lokationssignal zur Freigabe des Zugangs zu einer Datenverarbeitungseinrichtung heranzuziehen. Auf diese Weise kann sichergestellt werden, daß der Zugriff zu einer Datenverarbeitungseinrichtung nur über bestimmte ausgewählte und mittels der Lokationskennung räumlich zuordnenbare Zugangsterminals erfolgt, deren individuelles Lokationssignal zuvor der Identifikationskennung zugeordnet wurde. Die Paare einander zugeordneter Lokationssignale und Identifikationskennungen können so gebildet und in einer zentralen Speichereinheit gespeichert werden, daß beispielsweise bestimmte Personen mit einer ihnen zugeordneten Identifikationskennung nur über bestimmte Zugangsterminals Zugriff auf eine Datenverarbeitungseinrichtung haben. Identifikationskennungen können auch für einzelne Dienste, die von einer Datenverarbeitungseinrichtung angeboten werden, vergeben werden. Diese Dienste sind dann nur an bestimmten Zugangsterminals verfügbar. Beispielsweise können Eingriffe in eine von einer Datenverarbeitungseinrichtung gesteuerten Prozeßsteuerung nur von solchen Zugangsterminals aus erfolgen, die sich in einem Prozeßleitstand befinden.

Dem erfindungsgemäßen Erreichen des Ziels insbesondere in Verbindung mit dem vorgenannten Verfahren dient auch ein Verfahren der eingangs genannten Art, bei dem zunächst in vorbereitenden Verfahrensschritten für das Zugangsterminal nach einem Public Key-Verfahren ein geheimer und ein dem geheimem Schlüssel zugeordneter öffentlicher Schlüssel zur Datenver- und -entschlüsselung erzeugt werden, bei dem anschließend der öffentliche Schlüssel in einer Speichereinheit abrufbar gespeichert wird, während der geheime Schlüssel in dem Zugangsterminal, für das der geheime und der zugeordnete öffentliche Schlüssel erzeugt wurden, nur vom Zugangsterminal selbst abrufbar gespeichert wird, und bei dem nach Abschluß der vorbereitenden Verfahrensschritte bei einem oder jedem Zugriff auf das Zugangsterminal ein dem Zugangsterminal zugeordnetes, den Ort eines mit dem Zugangsterminal verbundenen Lokationsgeber kennzeichnendes Lokationssignal erzeugt wird, bei dem das Lokationssignal anschließend mit dem geheimen Schlüssel verschlüsselt und daraufhin der Datenverarbeitungseinrichtung als Identifikationssignal übermittelt wird, bei dem die Datenverarbeitungseinrichtung danach das Identifikationssignal mit demjenigen öffentlichen Schlüssel entschlüsselt, der dem Zugangsterminal zugeordnet ist, welches das verschlüsselte Identifikationssignal erzeugt hat und bei erfolgreicher Entschlüsselung den Zugang zu der Datenverarbeitungseinrichtung über das Zugangsterminal freigibt.

Vorzugsweise werden der geheime und der öffentliche Schlüssel für das Zugangsterminal in dem Zugangsterminal selbst erzeugt und der öffentliche Schlüssel anschließend der Speichereinheit übermittelt. Eine Datenverarbeitungseinrichtung kann dann zum Entschlüsseln eines Identifikationssignals jeweils denjenigen öffentlichen Schlüssel von der Speichereinheit abrufen, der dem Zugangsterminal zugeordnet ist, welches das verschlüsselte Identifikationssignal erzeugt hat.

Vorzugsweise wird der Zugang jeweils für die Dauer eines Zugriffs freigegeben.

Indem gemäß dem Verfahren ein einem Zugangsterminal zugeordnetes Lokationssignal mit einem ebenfalls dem Zugangsterminal zugeordneten geheimen Schlüssel verschlüsselt und der Datenverarbeitungseinrichtung übermittelt wird, wird verhindert, daß sich eine Person oder ein Vorgang ohne Kenntnis des speziellen Lokationssignals sowie des zugehörigen geheimen Schlüssels gegenüber der Datenverarbeitungseinrichtung als autorisiert ausgeben kann. Da der geheime Schlüssel nicht aus dem Zugangsterminal bzw. dem Lokationsgeber herausgegeben zu werden braucht und daher in dem Zugangsterminal oder dem Lokationsgeber so gespeichert werden kann, daß er nicht von außerhalb des Terminals abrufbar ist, können das Zugangsterminal oder der Lokationsgeber so gestaltet werden, daß der geheime Schlüssel nicht ohne äußere Gewalt auf das Zugangsterminal oder den Lokationsgeber ermittelbar ist. Ein derartiger Angriff auf das Zugangsterminal oder den Lokationsgeber bliebe auch nicht unbemerkt, so daß ein unbemerkter Zugang zu der Datenverarbeitungseinrichtung auf einem anderen Wege als über entsprechende autorisierte Zugangsterminals nicht möglich ist.

Ein aus mehreren Datenverarbeitungseinrichtungen und Zugangsterminals bestehendes Netzwerk kann demnach so ausgelegt werden, daß der Zugang zu einzelnen Datenverarbeitungseinrichtungen nur über definierte Zugangsterminals möglich ist. Diese Zugangsterminals können beispielsweise in Räumen eingerichtet werden, zu denen nur autorisierte Personen Zugang haben. Auf diese Weise läßt sich ein nicht autorisierter Zugriff selbst auf solch eine Datenverarbeitungseinrichtung ausschließen, die sich nicht in diesem Raum befindet, da die Möglichkeit des Zugriffs mit Hilfe des Lokationssignals auf solche Zugangsterminals beschränkt werden kann, die sich in gesicherten Räumen befinden, zu denen beispielsweise nur bestimmte Personen Zutritt haben.

Um auf zentralem Wege einen Zugriff nur auf bestimmte, von einer Datenverarbeitungseinrichtung angebotene Dienste zuzulassen, werden vorzugsweise Paare einander zugeordneter geheimer und öffentlicher Schlüssel für spezielle, von der Datenverarbeitungseinrichtung angebotene Dienste gebildet und dem Zugangsterminal verschlüsselt oder auf geheimen Weg übermittelt, wobei zur Abfrage des Dienstes der den Dienst anbietenden Datenverarbeitungseinrichtung von dem den Dienst abfragenden Zugangsterminal ein mit dem dem entsprechenden Dienst zugeordneten geheimen Schlüssel verschlüsseltes Abfragesignal übermittelt wird, welches mit dem dem Dienst zugeordneten öffentlichen Schlüssel entschlüsselt wird, wobei der Dienst nur bei erfolgreicher Entschlüsselung freigegeben wird. Der beschriebene Weg einer zentralen Schlüsselbildung ermöglicht unter anderem eine zentrale Vergabe und Speicherung von Schlüsseln und zugeordneten Diensten.

Die geheime Übermittlung des dem Dienst zugeordneten geheimen Schlüssels kann beispielsweise auf dem Postweg erfolgen. Vorzugsweise wird der einem speziellen Dienst zugeordnete geheime Schlüssel jedoch mit dem öffentlichen Schlüssel eines Zugangsterminals verschlüsselt und dem Zugangsterminal übermittelt. Im Zugangsterminal kann der dem Dienst zugeordnete geheime Schlüssel dann mit dem dem Zugangsterminal zugeordneten geheimen Schlüssel entschlüsselt und dort zur Abfrage des Dienstes verwendet oder zu diesem Zweck gespeichert werden.

Eine weitere bevorzugte Verfahrensvariante zeichnet sich dadurch aus, daß das Lokationssignal von einem Satellitenempfänger, wie einem GPS-Empfänger, als Lokationsgeber erzeugt wird. Diese Verfahrensvariante läßt eine genaue und einfache Ortsbestimmung mit Hilfe des Global Positioning Systems oder eines ähnlichen Systems zu. Ebenso vorteilhaft ist aber auch ein räumlich fest verankerter Lokationsgeber, der ein möglichst geheimes, ihn möglichst eindeutig kennzeichnendes Lokationssignal abgeben kann.

Bevorzugt wird weiterhin ein Verfahren, bei dem der geheime und der öffentliche Schlüssel von dem Lokationsgeber gebildet werden. Auf diese Weise wird eine enge Verknüpfung des geheimen Schlüssels und des Lokationsgebers erzielt.

Eine besonders bevorzugte Verfahrensvariante zeichnet sich dadurch aus, daß der Speichereinheit ein eigener geheimer und ein dazugehöriger öffentlicher Schlüssel zugeordnet werden, von denen der öffentliche Schlüssel unverschlüsselt abrufbar ist, während der geheime Schlüssel zum Verschlüsseln des in der Speichereinheit gespeicherten, dem Zugangsterminal zugeordneten öffentlichen Schlüssels oder des Wertepaares aus Lokationssignal und Identifikationskennung dient.

Die Speichereinheit kann auch aus mehreren, räumlich verteilten Komponenten bestehen, die dann jeweils eigene Schlüssel besitzen können.

Auf diese Weise kann vermieden werden, daß ein nicht autorisierter Zugriff auf die Datenverarbeitungseinrichtung dadurch erfolgt, daß der Datenverarbeitungseinrichtung eine Speichereinheit für die öffentlichen Schlüssel der Zugangsterminals vorgetäuscht wird, die auch einem öffentlichen Schlüssel zu einem nicht autorisierten, vorgetäuschten Zugangsterminal mitentsprechendem geheimen Schlüssel und entsprechendem Lokationssignal enthält. Die Speichereinheit für die öffentlichen Schlüssel der Zugangsterminals autorisiert sich vielmehr selbst durch die Verwendung ihres geheimen Schlüssels, der für die Datenverarbeitungseinrichtung unverschlüsselt abrufbar ist. Dies führt dazu, daß ein nicht autorisierter Zugriff auf die Speichereinheit und die Datenverarbeitungseinrichtungen nicht möglich ist, so daß der öffentliche Schlüssel für die Speichereinheit nicht durch autorisierten Zugriff beispielsweise dahingehend geändert werden kann, daß er zu dem geheimen Schlüssel einer nicht autorisierten vorgetäuschten Speichereinheit paßt.

Außerdem kann der Speichereinheit ein eigener Lokationsgeber zugeordnet werden, so daß sich die Speichereinheit mit Hilfe des ihr zugeordneten geheimen Schlüssels sowie des Lokationsgebers nur dann autorisieren kann, wenn sich die Speichereinheit an dem vorgesehenen Ort befindet.

Eine weitere bevorzugte Verfahrensvariante zeichnet sich dadurch aus, daß dem Lokationssignal vor der Verschlüsselung ein den Zeitpunkt der Erzeugung des Lokationssignals angebendes Zeitsignal hinzugefügt wird und daß für die Übertragung des Lokationssignals zu der Datenverarbeitungseinrichtung ein Zeitrahmen vorgegeben wird und der Zugang zu der Datenverarbeitungseinrichtung verweigert wird, wenn der Zeitpunkt der Erzeugung des Lokationssignals und der Empfang des verschlüsselten Identifikationssignals in der Datenverarbeitungseinrichtung nicht innerhalb des Zeitrahmens liegen. Mit dieser Verfahrensvariante soll dem vorgebeugt werden, daß ein verschlüsseltes Identifikationssignal abgefangen wird und eine gefälschte Nachricht an das Identifikationssignal angehängt wird. Der Zeitrahmen für die Übertragung des verschlüsselten Identifikationssignals kann so gewählt werden, daß ein derartiges Abfangen und Verändern der an das verschlüsselte Identifikationssignal angehängten Nachricht nicht innerhalb des Zeitrahmens erfolgen kann. Von einem GPS-Empfänger als Lokationsgeber wird ein entsprechendes Zeitsignal regelmäßig erzeugt. Wenn auch die Datenverarbeitungseinrichtung einen solchen GPS-Empfänger enthält, sind die Zeitsignale des Zugangsterminals und der Datenverarbeitungseinrichtung ohne weiteres synchronisiert.

Alternativ zu der letztgenannten Verfahrensvariante kann anhand einer an das Identifikationssignal angehängten Nachricht ein Hash-Code gebildet werden, derfür die Nachricht spezifisch ist. Dieses Verfahren wird beispielsweise bei der Autorisierung von Nachrichten gemäß der bekannten PGP (Pretty-Good-Privacy)-Verschlüsselung verwendet.

Die Erfindung besteht außerdem in einer Vorrichtung der eingangs genannten Art zur Durchführung des Verfahrens, die sich durch einen fest mit dem Zugangsterminal verbundenen Lokationsgeber, der ein den Ort des Lokationsgebers angebendes Lokationssignal abgeben kann, sowie durch einen mit dem Zugangsterminal fest verbundenen Speicher für einen dem Zugangsterminal zugeordneten geheimen Schlüssel sowie eine mit der Datenverarbeitungseinrichtung und dem Zugangsterminal verbundene Speichereinheit für eine dem geheimen Schlüssel zugeordneten öffentlichen Schlüssel auszeichnet.

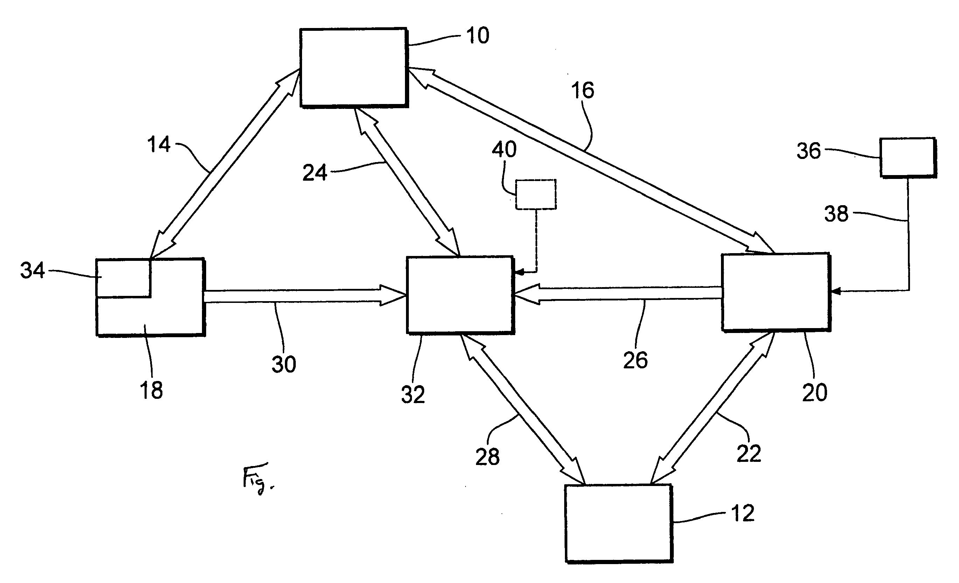

Die Erfindung soll nun anhand eines Ausführungsbeispiels mit Bezug auf die Figur näher erläutert werden. Die Figur zeigt miteinander über Datenverbindungen verbundene Datenverarbeitungseinrichtungen und Zugangsterminals.

Genauer zeigt die Figur zwei Datenverarbeitungseinrichtungen 10 und 12, von denen die Datenverarbeitungseinrichtung 10 über Datenverbindungen 14 und 16 mit zwei Zugangsterminals 18 und 20 verbunden ist, während die Datenverarbeitungseinrichtung 12 über eine entsprechende Datenverbindung 22 mit dem Zugangsterminal 20 verbunden ist. Die beiden Zugangsterminals 18 und 20 sowie die beiden Datenverarbeitungseinrichtungen 10 und 12 sind über entsprechende Datenverbindungen 24, 26, 28 und 30 mit einer zentralen Speichereinheit 32 verbunden. Die zentrale Speichereinheit 32 kann dabei räumlich, beispielsweise in eine der beiden Datenverarbeitungseinrichtungen 10 und 12 integriert sein. Es ist somit nicht notwendig aber möglich, daß die Datenverarbeitungseinrichtungen 10 und 12 sowie Zugangsterminals 18 und 20 und die Speichereinheit 32 räumlich weit voneinander entfernt sind und durch ein Wide Area Network (WAN) miteinander verbunden sind.

Die beiden Zugangsterminals 18 und 20 sind jeweils fest mit einem Lokationsgeber 34 und 36 verbunden. Wie in der Figur angedeutet, ist der Lokationsgeber 34 in das Zugangsterminal 18 integriert, während der Lokationsgeber 36 über eine Signalleitung 38 mit dem Zugangsterminal 20 verbunden ist. Die Zugangsterminals 18 und 20 können beispielsweise herkömmliche Personalcomputer sein. Die Lokationsgeber 34 und 36 können GPS-Empfänger sein, die mit Hilfe des Global Positioning Systems ein Signal erzeugen, das den Ort des jeweiligen GPS-Empfängers angibt sowie die jeweilige Referenzzeit für das Global Positioning System. Für eine sichere und festere Bindung zwischen dem Lokationsgeber 34 und dem Zugangsterminal 18 kann der Lokationsgeber 34 beispielsweise auf eine Hauptplatine des Zugangsterminals 18 aufgelötet oder zumindest als Steckkarte in einen freien Steckplatz auf der Hauptplatine des Zugangsterminals 18 vorgesehen sein. Auch die Speichereinheit 32 ist vorzugsweise mit einem Lokationsgeber 40 verbunden. Wenn dieser ein GPS-Empfänger ist, steht der Speichereinheit 32 auch die Referenzzeit des Global Positioning Systems zur Verfügung.

Das Verfahren zur Sicherung des Zugangs zu den Datenverarbeitungseinrichtungen 10 und 12 ist zweistufig: In einer ersten für jedes Zugangsterminal 18 oder 20 nur einmal durchzuführenden Verfahrensstufe werden in den Zugangsterminals 18 und 20 jeweils ein geheimer und ein öffentlicher Schlüssel nach einem bekannten Public Key-Verfahren gebildet. Im Ergebnis gibt es für jedes Zugangsterminal 18 oder 20 ein genau diesem Zugangsterminal zugeordnetes Paar aufeinander bezogener Schlüssel. Von den beiden Schlüsseln eines Paares wird ein geheimer Schlüssel in dem Zugangsterminal, in dem er erzeugt wurde, gespeichert, während ein öffentlicher Schlüssel an die zentrale Speichereinheit 32 weitergegeben wird. In der Speichereinheit 32 sind die öffentlichen Schlüssel aller Zugangsterminals abrufbar gespeichert.

Zusätzlich werden in der Speichereinheit die Ortsdaten für jedes Zugangsterminal 18 und 20 gespeichert. Die Ortsdaten eines Zugangsterminals 18 oder 20 bilden zusammen mit dem diesem Zugangsterminal zugeordneten öffentlichen Schlüssel einen Datensatz. Außerdem können in der Speichereinheit 32 auch Identifikationskennungen gespeichert werden, die autorisierten Zugangsterminals oder autorisierten Personen zugeordnet sind. Insbesondere die Identifikationskennungen autorisierter Personen können mit den Ortsdaten oder dem öffentlichen Schlüssel eines oder mehrerer Zugangsterminals so verknüpft werden, daß autorisierte Personen der Zugang zu bestimmten Datenverarbeitungseinrichtungen nur über bestimmte ausgewählte Zugangsterminals möglich ist.

Bei einem Zugriff auf ein Zugangsterminal 18 oder 20 mit dem Ziel, Zugang zu einer der Datenverarbeitungsrichtungen zu erlangen, erzeugt der dem Zugangsterminal 18 oder 20 zugeordnete Lokationsgeber 34 oder 36 zunächst ein den Ort des Zugangsterminals angebendes Lokationssignal. Dieses Lokationssignal sowie eine das Zugangsterminal oder die zugreifende Person kennzeichnende Identifikationskennung werden zu einem Wertepaar zusammengefaßt, mit dem im Zugangsterminal gespeicherten geheimen Schlüssel verschlüsselt und anschließend als Identifikationssignal derjenigen Datenverarbeitungseinrichtung übermittelt, für die Zugang begehrt wird. Die Datenverarbeitungseinrichtung 10 oder 12 ruft daraufhin von der Speichereinheit 32 denjenigen öffentlichen Schlüssel ab, der demjenigen Zugangsterminal zugeordnet ist, von dem die Datenverarbeitungseinrichtung das Identifikationssignal erhalten hat. In der Datenverarbeitungseinrichtung wird das Identifikationssignal mit dem zu dem geheimen Schlüssel kompatiblen öffentlichen Schlüssel entschlüsselt. Dies ist nur dann möglich, wenn das Identifikationssignal tatsächlich mit dem authentischen, in dem Zugangsterminal von außen nicht zugänglich gespeicherten geheimen Schlüssel verschlüsselt wurde. Allein das erfolgreiche Entschlüsseln des Identifikationssignals reicht somit im einfachsten Fall aus, um das Zugangsterminal zu autorisieren.

Die Sicherheit der Autorisierung des Zugangsterminals wird dadurch gesteigert, daß das in dem Identifikationssignal enthaltene Lokationssignal, das den Ort des Zugangsterminals angibt, mit den in der Speichereinheit 32 gespeicherten Ortsdaten des entsprechenden Zugangsterminals verglichen wird. Weiterhin kann von der Datenverarbeitungseinrichtung überprüft werden, ob eine gegebenenfalls in dem Identifikationssignal enthaltene Identifikationskennung zu dem Zugangsterminal gehört oder zu einer Person, die zum Zugriff auf die Datenverarbeitungseinrichtung über das entsprechende Zugangsterminal berechtigt ist.

## Patentansprüche

1. Verfahren zur Sicherung des Zugangs zumindest einer Datenverarbeitungseinrichtung (10, 12) über mindestens ein Zugangsterminal (18, 20), das über eine Datenverbindung (14, 16, 22) mit der Datenverarbeitungseinrichtung (10, 12) verbunden ist, bei dem der Datenverarbeitungseinrichtung (10, 12) über die Datenverbindung (14, 16, 22) ein Identifikationssignal übermittelt wird, **dadurch gekennzeichnet, daß** dem autorisierten Zugangsterminal (18, 20), oder der autorisierten Person für einen Zugriff auf die Datenverarbeitungseinrichtung (10,12) eine Identifikationskennung zugeordnet wird, und daß die Identifikationskennung mit dem Lokationssignal, das den von einem Lokationsgeber (34, 36) ermittelten Ortsdaten das Zugangsterminal entspricht zu einem Wertepaar zusammengefaßt, anschließend der Datenverarbeitungseinrichtung (10, 12) als Identifikationssignal übermittelt und daraufhin mit in einer Speichereinheit (32) gespeicherten zulässigen Wertepaaren verglichen wird, und daß bei Übereinstimmen des übermittelten Wertepaares mit einem zulässigen Wertepaar der Zugang zu der Datenverarbeitungseinrichtung (10, 12) freigegeben wird.

2. Verfahren nach Anspruch 1, **dadurch gekennzeichnet, daß** der Zugang jeweils für die Dauer eines Zugriffs freigegeben wird.

3. Verfahren nach Anspruch 1 oder 2, **dadurch gekennzeichnet, daß** die Identifikationskennung dem Zugangsterminal (18, 20) fest zugeordnet und in dem Zugangsterminal (18, 20) gespeichert wird.

4. Verfahren nach Anspruch 1 oder 2, **dadurch gekennzeichnet, daß** die Identifikationskennung dem Zugangsterminal (18, 20) bei einem Zugriff übermittelt wird.

5. Verfahren nach Anspruch 4, **dadurch gekennzeichnet, daß** die Identifikationskennung dem Zugangsterminal (18, 20) bei einem Zugriff über eine Tastatur eingegeben wird.

6. Verfahren nach Anspruch 4, **dadurch gekennzeichnet, daß** die Identifikationskennung dem Zugangsterminal (18, 20) bei einem Zugriff über ein transportables, von dem Zugangsterminal (18, 20) ablesbares Speichermedium wie einer Chipkarte oder dergleichen übermittelt wird.

7. Verfahren, insbesondere nach einem der Ansprüche 1 bis 6, **dadurch gekennzeichnet, daß** zunächst in vorbereitenden Verfahrensschritten für das Zugangsterminal (18, 20) nach einem Public Key-Verfahren ein geheimer und ein dem geheimen Schlüssel zugeordneter öffentlicher Schlüssel zur Datenver- und -entschlüsselung erzeugt werden, daß anschließend der öffentliche Schlüssel einer Speichereinheit (32) abrufbar gespeichert wird, während der geheime Schlüssel in dem Zugangsterminal (18, 20), für das der geheime und der zugeordnete öffentliche Schlüssel erzeugt wurden, gespeichert wird, und daß nach Abschluß der vorbereitenden Verfahrensschritte einem oder jedem Zugriff auf das Zugangsterminal (18, 20) ein dem Zugangsterminal (18, 20) zugeordnetes, den Ort eines mit dem Zugangsterminal (18, 20) verbundenen Lokationsgebers (34, 36) kennzeichnendes Lokationssignal erzeugt wird, daß das Lokationssignal anschließend mit dem geheimen Schlüssel verschlüsselt und daraufhin der Datenverarbeitungseinrichtung (10, 12) als Identifikationssignal übermittelt wird, daß die Datenverarbeitungseinrichtung (10, 12) danach das Identifikationssignal mit demjenigen öffentlichen Schlüssel entschlüsselt, der dem Zugangsterminal (18, 20) zugeordnet ist, welches das verschlüsselte Identifikationssignal erzeugt hat und bei erfolgreicher Entschlüsselung den Zugang zu der Datenverarbeitungseinrichtung (10, 12) über das Zugangsterminal (18, 20) freigibt.

8. Verfahren nach einem der Ansprüche 1 bis 7, **dadurch gekennzeichnet, daß** das Lokationssignal von einem Satellitenempfänger, wie einem GPS-Empfänger, erzeugt wird.

9. Verfahren nach Anspruch 7 und 8, **dadurch gekennzeichnet, daß** der geheime und der öffentliche Schlüssel von dem Lokationsgeber (34, 36) gebildet werden.

10. Verfahren nach einem der Ansprüche 7 bis 9, **dadurch gekennzeichnet, daß** Paare einander zugeordneter geheimer und öffentlicher Schlüssel für spezielle, von der Datenverarbeitungseinrichtung (10, 12) angebotene Dienste gebildet werden und dem Zugangsterminal (18, 20) verschlüsselt oder auf geheimen Weg übermittelt wird, und daß der den Dienst anbietenden Datenverarbeitungseinrichtung (10, 12) von dem den Dienst abfragenden Zugangsterminal (18, 20) ein mit dem dem entsprechenden Dienst zugeordneten geheimen Schlüssel verschlüsseltes Abfragesignal übermittelt wird, welches mit dem dem Dienst zugeordneten öffentlichen Schlüssel entschlüsselt wird, wobei der Dienst nur bei erfolgreicher Entschlüsselung freigegeben wird.

11. Verfahren nach Anspruch 10, **dadurch gekennzeichnet, daß** ein einem speziellen Dienst zugeordneter geheimer Schlüssel mit dem öffentlichen Schlüssel eines Zugangsterminals (18, 20) verschlüsselt und dem Zugangsterminal (18, 20) übermittelt wird.

12. Verfahren nach einem der Ansprüche 1 bis 11, **dadurch gekennzeichnet, daß** der Speichereinheit (32) ein eigener geheimer und ein dazugehöriger öffentlicher Schlüssel zugeordnet werden, von denen der öffentliche Schlüssel unverschlüsselt abrufbar ist, während der geheime Schlüssel zum Verschlüsseln des in der Speichereinheit gespeicherten, dem Zugangsterminal zugeordneten öffentlichen Schlüssels dient.

13. Verfahren nach einem der Ansprüche 1 bis 12, **dadurch gekennzeichnet, daß** dem Lokationssignal vor der Verschlüsselung ein den Zeitpunkt der Erzeugung des Lokationssignals angebendes Zeitsignal hinzugefügt wird, und daß für die Übertragung des Lokationssignals zu der Datenverarbeitungseinrichtung (10, 12) ein Zeitrahmen vorgegeben wird und der Zugang zu der Datenverarbeitungseinrichtung (10, 12) verweigert wird, wenn die Zeitpunkte der Erzeugung des Lokationssignals und des Empfangs des verschlüsselten Identifikationssignals in der Datenverarbeitungseinrichtung (10, 12) nicht innerhalb des Zeitrahmens liegen.

14. Vorrichtung, die Mitteln enthält um jedem Schritt des Verfahrens nach Anspruch 1 auszuführen.

## Claims

1. Method for protecting access to at least one data-processing device (10, 12) via at least one access terminal (18, 20) which is connected via a data connection (14, 16, 22) to the data-processing device (10, 12), in which an identification signal is transmitted to the data-processing device (10, 12) via the data connection (14, 16, 22), **characterized in that** the authorized access terminal (18, 20) or authorized person is allocated an identification label for access to the data-processing device (10, 12), and **in that** the identification label is combined with the location signal which corresponds to the coordinates, ascertained by a location indicator (34, 36), of the access terminal to form a value pair, then transmitted as an identification signal to the data-processing device (10, 12) and thereupon compared with valid value pairs stored in a memory unit (32), and **in that** access to the data-processing device (10, 12) is approved if the transmitted value pair corresponds to a valid value pair.

2. Method according to claim 1, **characterized in that** access is approved in each case for the duration of an access.

3. Method according to claim 1 or 2, **characterized in that** the identification label is allocated fixed to the access terminal (18, 20) and is stored in the access terminal (18, 20).

4. Method according to claim 1 or 2, **characterized in that** the identification label is transmitted to the access terminal (18, 20) upon an access.

5. Method according to claim 4, **characterized in that** the identification label is entered via a keyboard into the access terminal (18, 20) upon an access.

6. Method according to claim 4, **characterized in that** the identification label is transmitted to the access terminal (18, 20) upon an access via a transportable storage medium, such as a chip card or similar, which can be read by the access terminal (18, 20).

7. Method, in particular according to one of claims 1 to 6, **characterized in that** firstly in preparatory method steps a secret key and a public key allocated to the secret key are created for the access terminal (18, 20) for data encryption and decryption according to a public key process, **in that** the public key is then requestably stored in a memory unit (32) while the secret key is stored in the access terminal (18, 20) for which the secret and the allocated open keys were created, and **in that** when the preparatory method steps are completed [upon] an or every access to the access terminal (18, 20) a location signal, allocated to the access terminal (18, 20) identifying the position of a location indicator (34, 36) connected to the access terminal (18, 20), is created, **in that** the location signal is then encrypted with the secret key and thereupon transmitted as an identification signal to the data-processing device (10, 12), **in that** the data-processing device (10, 12) then encrypts the identification signal with the public key that is allocated to the access terminal (18, 20) which created the encrypted identification signal and, if encryption is successful, approves access to the data-processing device (10, 12) via the access terminal (18, 20).

8. Method according to one of claims 1 to 7, **characterized in that** the location signal is produced by a satellite receiver, such as a GPS receiver.

9. Method according to claims 7 and 8, **characterized in that** the secret key and the public key are formed by the location indicator (34, 36).

10. Method according to one of claims 7 to 9, **characterized in that** pairs of secret and public keys allocated to each other are formed for specific services offered by the data-processing device (10, 12) and transmitted encrypted or secretly to the access terminal (18, 20), and **in that** a request signal encrypted with the secret key allocated to the corresponding service is transmitted to the data-processing device (10, 12) offering the service by the access terminal (18, 20) requesting the service, which signal is encrypted with the public key allocated to the service, wherein the service is approved only if decryption is successful.

11. Method according to claim 10, **characterized in that** a secret key allocated to a specific service is encrypted with the public key of an access terminal (18, 20) and is transmitted to the access terminal (18, 20).

12. Method according to one of claims 1 to 11, **characterized in that** the memory unit (32) is allocated its own secret key and an associated public key, of which the public key can be requested unencrypted, while the secret key, allocated to the access terminal, serves for the encryption of the public key stored in the memory unit.

13. Method according to one of claims 1 to 12, **characterized in that** prior to encryption a time signal giving the time of the generation of the location signal is added to the location signal, and **in that** a time frame is predetermined for the transmission of the location signal to the data-processing device (10, 12) and access to the data-processing device (10, 12) is refused if the times of the generation of the location signal and of the receipt of the encrypted identification signal in the data-processing device (10, 12) do not lie within the time frame.

14. Device which contains means to carry out every step of the method according to claim 1.

## Revendications

1. Procédé permettant de sécuriser l'accès à au moins un dispositif de traitement de données (10, 12) par l'intermédiaire d'au moins un terminal d'accès (18, 20) qui est relié au dispositif de traitement de données (10, 12) par l'intermédiaire d'une liaison de données (14, 16, 22), dans lequel un signal d'identification est transmis au dispositif de traitement de données (10, 12) via la liaison de données (14, 16, 22), **caractérisé en ce qu'**un caractère d'identification est attribué au terminal d'accès autorisé (18, 20) ou à la personne autorisée, pour une opération d'accès au dispositif de traitement de données (10, 12), et **en ce que** le caractère d'identification est groupé en une paire de valeurs avec le signal de localisation, qui correspond aux données de localisation du terminal d'accès déterminées par un transmetteur de localisation (34, 36), est ensuite transmis au dispositif de traitement de données (10, 12) en tant que signal d'identification, puis comparé à des paires de valeurs autorisées stockées dans une unité de mémoire (32), et **en ce que**, en cas de concordance de la paire de valeurs transmise avec une paire de valeurs autorisée, l'accès au dispositif de traitement de données (10, 12) est autorisé.

2. Procédé selon la revendication 1, **caractérisé en ce que** l'accès est autorisé respectivement pour la durée d'une opération d'accès.

3. Procédé selon la revendication 1 ou 2, **caractérisé en ce que** le caractère d'identification est attribué définitivement au terminal d'accès (18, 20) et est stocké dans le terminal d'accès (18, 20).

4. Procédé selon la revendication 1 ou 2, **caractérisé en ce que** le caractère d'identification est transmis au terminal d'accès (18, 20) lors d'une opération d'accès.

5. Procédé selon la revendication 4, **caractérisé en ce que** le caractère d'identification est entré dans le terminal d'accès (18, 20) lors d'une opération- d'accès par l'intermédiaire d'un clavier.

6. Procédé selon la revendication 4, **caractérisé en ce que** le caractère d'identification est transmis au terminal d'accès (18, 20) lors d'une opération d'accès par l'intermédiaire d'un support de stockage transportable lisible par le terminal d'accès (18, 20), tel qu'une carte à puce ou autre composant similaire.

7. Procédé, en particulier selon l'une des revendications 1 à 6, **caractérisé en ce qu'**en premier lieu, lors d'étapes de procédé préparatoires pour le terminal d'accès (18, 20) selon un Procédé à Clé publique, sont générées une clé privée et une clé publique attribuée à la clé privée pour le codage et le décodage de données, **en ce qu'**ensuite, la clé publique est stockée de manière à pouvoir être appelée dans une unité de mémoire (32), tandis que la clé privée est stockée dans le terminal d'accès (18, 20) pour lequel ont été générées la clé privée et la clé publique attribuée, et **en ce que**, après réalisation des étapes de procédé préparatoires, à une ou à chaque opération d'accès au terminal d'accès (18, 20) est généré un signal de localisation attribué au terminal d'accès (18, 20), caractérisant l'emplacement d'un transmetteur de localisation (34, 36) relié au terminal d'accès (18, 20), **en ce que** le signal de localisation est ensuite codé avec la clé privée, puis est transmis au dispositif de traitement de données (10, 12) en tant que signal d'identification, **en ce que** le dispositif de traitement de données (10, 12) décode ensuite le signal d'identification avec la clé publique qui est attribuée au terminal d'accès (18, 20) qui a généré le signal d'identification codé et, en cas de décodage concluant, autorise l'accès au dispositif de traitement de données (10, 12) par l'intermédiaire du terminal d'accès (18, 20).

8. Procédé selon l'une des revendications 1 à 7, **caractérisé en ce que** le signal de localisation est généré par un récepteur de satellite, tel qu'un récepteur GPS.

9. Procédé selon la revendication 7 et 8, **caractérisé en ce que** la clé privée et la clé publique sont générées par le transmetteur de localisation (34, 36).

10. Procédé selon l'une des revendications 7 à 9, **caractérisé en ce que** des paires de clés privées et publiques dédiées à des services spéciaux proposés par le dispositif de traitement de données (10, 12) sont générées et sont transmises au terminal d'accès (18, 20) de manière codée ou par voie secrète, et **en ce qu'**un signal d'interrogation codé avec la clé privée attribuée au service correspondant est transmis au dispositif de traitement de données (10, 12) proposant le service par le terminal d'accès (18, 20) demandant le service, ledit signal d'interrogation étant décodé avec la clé publique attribuée au service, le service étant autorisé uniquement en cas de décodage réussi.

11. Procédé selon la revendication 10, **caractérisé en ce qu'**une clé privée attribuée à un service spécial est codée avec la clé publique d'un terminal d'accès (18, 20) et transmise au terminal d'accès (18, 20).

12. Procédé selon l'une des revendications 1 à 11, **caractérisé en ce qu'**une clé privée propre et une clé publique correspondante sont attribuées à l'unité de mémoire (32), à partir desquelles la clé publique peut être appelée de manière non codée, tandis que la clé privée sert à coder la clé publique attribuée au terminal d'accès et stockée dans l'unité de mémoire.

13. Procédé selon l'une des revendications 1 à 12, **caractérisé en ce qu'**un signal temporel indiquant le moment de la génération du signal de localisation est ajouté au signal de localisation avant le codage, **en ce qu'**est fixé un cadre temporel pour la transmission du signal de localisation au dispositif de traitement de données (10, 12), et **en ce que** l'accès au dispositif de traitement de données (10, 12) est refusé si les instants de génération du signal de localisation et de réception du signal d'identification codé dans le dispositif de traitement de données (10, 12) ne sont pas compris dans le cadre temporel.

14. Procédé qui contient des moyens pour réaliser chaque étape du procédé selon la revendication 1.
